# EUROPÄISCHE PATENTANMELDUNG

(11) **EP 4 011 483 A1**
(43) Veröffentlichungstag der Anmeldung: **15.06.2022**
(21) Anmeldenummer: 20020594.6
(22) Anmeldetag: 08.12.2020
(51) Int. Cl.: B01D 53/14, B01D 53/48, B01D 53/96

(54) **VERFAHREN UND ANLAGE ZUR ENTFERNUNG VON THIOLEN AUS SYNTHESEGAS**

(71) Anmelder: L'Air Liquide - Société Anonyme pour l'Etude et l'Exploitation des Procédés Georges Claude, 75321 Paris Cedex 07 (FR)
(72) Erfinder: Schmidt, Sophia, 60439 Frankfurt am Main (DE); Linicus, Matthias, 60439 Frankfurt am Main (DE); Leichner, Hincal, 60439 Frankfurt am Main (DE)
(74) Vertreter: Stang, Stefan

(57) **Zusammenfassung**

Die Erfindung betrifft ein Verfahren und eine Anlage zur Entfernung von Thiolen aus Synthesegas. Thiole und gegebenenfalls Thiophen und Kohlenstoffdisulfid werden in einer dedizierten Absorptionsstufe mit Methanol als physikalisch wirkenden Absorptionsmittel absorbiert. Mit zumindest Thiolen beladenes Methanol wird in einer Stripp-Stufe mit Methanol-Dämpfen als Stripp-Gas von Thiolen befreit, und die Methanol-Dämpfe enthaltenden Thiole werden in einer Wasch-Stufe von Methanol befreit. Das erfindungsgemäße Verfahren minimiert Methanol-Verluste und die für den Prozess erforderlichen Mengen an Kühlmittel.

## Beschreibung

### Gebiet der Erfindung

Die Erfindung betrifft ein Verfahren sowie eine Anlage zur Entfernung von Thiolen aus Synthesegas in einem Gaswäscheverfahren mit Methanol als physikalisch wirkendem Absorptionsmittel.

### Stand der Technik

Verfahren zur Abtrennung von unerwünschten Begleitstoffen aus technischen Synthesegasen mittels physikalischer Absorption sind aus dem Stand der Technik bekannt. So können mit solchen Verfahren unerwünschte Bestandteile aus durch Vergasung oder Reformierung von kohlenstoffhaltigen Einsatzstoffen erzeugten Synthesegasen, beispielsweise Kohlendioxid (CO₂), Schwefelwasserstoff (H₂S) und Carbonylsulfid (COS) von den erwünschten Synthesegasbestandteilen wie Wasserstoff (H₂) und Kohlenmonoxid (CO) bis in den Spurenbereich entfernt werden.

In diesen auch als Gaswäschen bezeichneten Verfahren werden die Eigenschaften von Flüssigkeiten ausgenutzt, gasförmige Stoffe zu absorbieren und physikalisch oder chemisch gebunden in Lösung zu halten. Wie gut ein Gas von einer Flüssigkeit absorbiert wird, wird durch den Absorptionskoeffizienten ausgedrückt. Je besser das Gas in der Flüssigkeit absorbiert oder gelöst wird, desto größer ist der Absorptionskoeffizient. Der Absorptionskoeffizient steigt im Allgemeinen mit sinkender Temperatur und, nach dem Gesetz von Henry, mit steigendem Druck. Die in Gaswäschen eingesetzten Flüssigkeiten werden allgemein auch als Absorptionsmittel bezeichnet.

Bei der Gaswäsche aus dem Synthesegas ausgewaschene Komponenten werden im Anschluss an die Gaswäsche aus dem beladenen Absorptionsmittel entfernt, wodurch ein regeneriertes oder zumindest teilregeneriertes Absorptionsmittel erhalten wird. Bekannte Verfahren zur Regenerierung des Absorptionsmittels sind Druckentspannung (Flashen), Druckentspannung mit Stripp-Gas (Strippen) sowie Druckentspannung mit Stripp-Gas, wobei zum Beispiel der Eigendampf des Absorptionsmittels als Stripp-Gas verwendet wird. Letzteres Verfahren wird häufig auch als Heißregenerierung bezeichnet. Um für eine erneute Absorption von Gaskomponenten aus dem Rohsynthesegas verwendet werden zu können, wird das Absorptionsmittel in der letzten Regenerationsstufe üblicherweise einer Heißregenerierung unterzogen. Durch die Heißregenerierung wird ein nahezu reines Absorptionsmittel zurückgewonnen, welches sich für die erneute Absorption von unerwünschten Gasbestandteilen aus dem Rohsynthesegas eignet.

Ein für die Reinigung von Rohsynthesegasen bedeutsames Verfahren ist die auch als Rectisol-Verfahren bekannte Methanol-Wäsche, welche beispielsweise in UII-mann's Encyclopedia of Industrial Chemistry, 6. Aufl. Bd. 15, S. 399 ff. grundsätzlich beschrieben wird. Das Rectisol-Verfahren nutzt die Tatsache aus, dass sich die Absorptionskoeffizienten von H₂S, COS und CO₂ in flüssigem, tiefkaltem Methanol um mehrere Größenordnungen von denen von H₂ und CO unterscheiden. Das Methanol wird nach dem Waschvorgang regeneriert und wieder in den Prozess zurückgeführt.

Neben den vorgenannten schwefelhaltigen Komponenten enthält technisch erzeugtes (Roh-)Synthesegas häufig zumindest in Spurenkonzentration weitere schwefelhaltige Substanzen wie niedere Alkylthiole (im Folgenden allgemein als "Thiole" bezeichnet) sowie Kohlenstoffdisulfid (CS₂). Ein weiterer unerwünschter, nicht schwefelhaltiger jedoch toxischer Begleitstoff ist Cyanwasserstoff (HCN). Dadurch wird die Regenerierung des Methanols im Allgemeinen erschwert, da Thiole, CS₂ und HCN aufgrund ihrer hohen Absorptionskoeffizienten physikalisch stark an das Methanol gebunden sind. Ein Verbleib dieser Substanzen im Methanol ist jedoch in jedem Fall zu vermeiden. HCN wirkt auf Anlagenbauteile stark korrosiv und ist toxisch. Thiole und CS₂ sind im gereinigten Synthesegas selbst in geringsten Mengen nicht tolerabel, da sie aufgrund ihres Schwefelgehalts für nachgelagerten Syntheseprozessen Probleme darstellen, beispielsweise aufgrund der Wirkung des Schwefels als Katalysatorgift.

In einer besonderen Ausgestaltung des Rectisol-Verfahrens wird die Tatsache der hohen Absorptionskoeffizienten von Thiolen, CS₂ und HCN dahingehend ausgenutzt, dass diese im Rahmen einer dedizierten Absorptionsstufe mit Hilfe einer relativ kleinen Menge Methanol aus dem Synthesegas ausgewaschen werden. Diese dedizierte Absorptionsstufe wird häufig auch als "Vorwäsche" bezeichnet. Weitere Absorptionsstufen beinhalten üblicherweise die mehr oder weniger selektive, das heißt getrennte Entfernung von Sauergasen wie H₂S, COS und CO₂ in einer Mehrzahl von weiteren Absorptionsstufen. Dabei können innerhalb einer Absorptionskolonne eine oder mehrere Absorptionsstufen angeordnet sein.

Das im Rahmen der Vorwäsche erhaltene, mit Thiolen und HCN beladene Methanol wird gemäß EP 3 666 365 in mehreren hintereinander geschalteten flash-Stufen von Wertgasen wie CO und H₂ befreit und anschließend nach einer weiteren Drucksenkung einer dem Vorwasch-Methanol dedizierten Stripp-Kolonne zugeführt, welche Methanol-Dampf als Stripp-Medium nutzt. Dabei verlassen die Thiole und HCN die Stripp-Kolonne nicht in Reinform, sondern zusammen mit signifikanten Mengen Methanol-Dampf. Das Methanol muss daher anschließend aufwendig durch Kühlmittel und Abscheider kondensiert werden, bevor die Thiole beispielsweise einer Schwefelrückgewinnungsanlage nach dem Claus-Verfahren zugeführt werden können. Trotz hohem Einsatz von Kühlmedien und Wärmeaustauschern ist dieser Prozess häufig mit Methanol-Verlusten behaftet. HCN muss reabsorbiert und anderweitige aus dem Verfahren ausgeschleust werden, damit es nicht der Schwefelrückgewinnung zugeführt wird und sich nicht im Kreislauf der Gaswäsche anreichert.

### Beschreibung der Erfindung

Allgemein ist es eine Aufgabe der vorliegenden Erfindung, die vorgenannten Nachteile des Standes der Technik zu überwinden.

Insbesondere besteht eine Aufgabe der vorliegenden Erfindung darin, Methanol-Verluste im Rahmen der Entfernung von Thiolen in einem Gaswäscheverfahren vom Typ des Rectisol-Verfahrens zu minimieren.

Eine weitere Aufgabe der vorliegenden Erfindung besteht darin, den Kühlmittel-Einsatz in Bezug auf Methanol-Kondensation zu minimieren.

Eine weitere Aufgabe der vorliegenden Erfindung besteht in einem Nebenaspekt darin, Cyanwasserstoff (HCN) aus dem Kreislauf des Gaswäsche-Verfahrens zu entfernen und in nichttoxischer Form zu entsorgen.

Ein Beitrag zur mindestens teilweisen Lösung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur Entfernung von Thiolen aus Synthesegas in einem Gaswäscheverfahren mit Methanol als physikalisch wirkendem Absorptionsmittel, gekennzeichnet durch die folgenden Verfahrensschritte:
(a) Entfernen von Thiolen aus Synthesegas in einer für die Entfernung von Thiolen konfigurierten Absorptions-Stufe, durch physikalische Absorption der Thiole in Methanol, wobei in der Absorptionsstufe mit Thiolen und weiteren co-absorbierten Gaskomponenten beladenes Methanol erhalten wird;
(b) Behandeln des gemäß Schritt (a) erhaltenen beladenen Methanol in einer Stripp-Stufe mit Methanol-Dampf als Stripp-Gas, wobei ein Thiole und Methanol aufweisendes gasförmiges Gemisch sowie mit co-absorbierten Gaskomponenten beladenes flüssiges Methanol erhalten werden;
(c) Abziehen des mit co-absorbierten Gaskomponenten beladenen flüssigen Methanol aus der Stripp-Stufe gemäß Schritt (b);
(d) Abziehen des Thiole und Methanol aufweisenden gasförmigen Gemisch aus der Stripp-Stufe gemäß Schritt (b);
(e) Entfernen von Methanol aus dem gemäß Schritt (d) abgezogenen gasförmigen Gemisch in einer Wasch-Stufe durch Waschen mit Wasser, wobei ein Methanol und Wasser aufweisendes flüssiges Gemisch sowie zumindest teilweise von Methanol befreite gasförmige Thiole erhalten werden;
(f) Abziehen der zumindest teilweise von Methanol befreiten gasförmigen Thiole aus der Wasch-Stufe gemäß Schritt (e);
(g) Abziehen des Methanol und Wasser aufweisenden flüssigen Gemisch aus der Wasch-Stufe gemäß Schritt (e).

Thiole und andere Schwefelverbindungen könnten durch Strippen mit Methanol-Dampf als Stripp Gas effektiv und zumindest teilweise selektiv aus dem beladenen Methanol entfernt, also desorbiert, werden. Dabei verlassen die Thiole die Stripp-Stufe als Gas nicht in Reinform, sondern enthalten immer auch eine nicht unerhebliche Menge Methanol-Dampf, also Stripp-Medium. Bei aus dem Stand der Technik bekannten Verfahren wird dieser Methanol-Dampf zur weitgehenden Vermeidung von Methanol-Verlusten möglichst vollständig kondensiert, was aufgrund der hohen Flüchtigkeit von Methanol einen hohen Kühlmittel-Aufwand erfordert.

Das erfindungsgemäße Verfahren zeichnet sich dadurch aus, dass das Methanol und Thiole aufweisende gasförmige Gemisch mit Wasser gewaschen wird. Dabei bildet sich eine flüssige Methanol-Wasser-Phase sowie eine gasförmige, um Methanol verarmte Thiol-Phase. Es wurde überraschend herausgefunden, dass die Thiole trotz des relativ polaren Charakters der Thiolgruppe praktisch nicht in Wasser gelöst werden. Das Wasch-Wasser löst stattdessen selektiv die Methanol-Dämpfe, wobei die Thiole praktisch als gasförmige Phase in Reinform als Ergebnis des Wasch-Prozesses erhalten werden.

Die Thiole können in Abhängigkeit von den gewählten Bedingungen (Druck, Temperatur etc.) ebenfalls kleinere Mengen anderer Gaskomponenten wie CO₂, H₂S und COS enthalten. Der Hauptteil der vorgenannten Komponenten bleibt während der Stripp-Stufe jedoch im beladenen Methanol absorbiert und wird aus diesem beladenen Methanol vorzugsweise in einer Heißregenerations-Stufe entfernt.

Gemäß einer Ausführungsform werden in Schritt (e) im Wesentlichen vollständig von Methanol befreite gasförmige Thiole erhalten. Gemäß einer weiteren Ausführungsform werden gemäß Schritt (e) vollständig von Methanol befreite gasförmige Thiole erhalten.

Gemäß einer Ausführungsform werden neben den Thiolen auch Kohlenstoffdisulfid (CS₂) und Thiophen (Summenformel C₄H₄S) durch das Verfahren selektiv aus Synthesegas entfernt. Diese Verbindungen weisen in Bezug auf Methanol ähnlich hohe Absorptionskoeffizienten auf.

Die Absorption der Thiole durch Methanol gemäß Schritt (a) erfolgt bei erhöhtem Druck. Insbesondere wird der Absorptionsschritt (a) bei einem Absolut-Druck von 10 bis 100 bar durchgeführt, vorzugsweise bei 20 bis 60 bar. Die Absorption der Thiole durch Methanol gemäß Schritt (a) erfolgt ferner bei tiefkalten Temperaturen, insbesondere bei Temperaturen von weniger als - 30 °C. Geeignete Bedingungen für die Absorption von Schwefelverbindungen und Kohlendioxid sowie weiterer in Synthesegas vorhandener Verunreinigungen sind dem Fachmann bekannt und können der einschlägigen Fachliteratur entnommen werden.

Synthesegas kann gemäß dem Fachmann bekannten Verfahren wie Kohlevergasung, Vergasung von kommunalen Abfällen (Müllvergasung), Biomassevergasung sowie Dampfreformierung (SMR), Trockenreformierung (DryRef), gasbeheizter Reformierung (GHR), partieller Oxidation (POx), autothermer Reformierung (ATR), sowie Kombinationen dieser Verfahren gewonnen werden. Dabei sind für die vorliegende Erfindung die zuerst genannten Vergasungsverfahren von herausragender Bedeutung, da hierbei in der Regel Einsatzstoffe mit hohem Schwefelgehalt verwendet werden. Synthesegas enthält Wasserstoff (H₂) und Kohlenmonoxid (CO) als gewünschte Komponenten, auch als Wertgase bezeichnet. Synthesegas enthält weiterhin unerwünschte Komponenten wie zum Beispiel Kohlendioxid (CO₂), Schwefelwasserstoff (H₂S), Carbonylsulfid (COS), Thiole (RSH), Kohlenstoffdisulfid (CS₂), Thiophen (C₄H₄S), Cyanwasserstoff (HCN), Methan (CH₄) und Stickstoff (N₂). Die Art und Konzentration der Verunreinigungen hängt von der Art des für die Synthesegaserzeugung verwendeten Einsatzstoffs und verwendeten Verfahrens ab.

Als Verunreinigung auftretende Thiole sind hauptsächlich niedere Alkanthiole wie Methanthiol, Ethanthiol, Propanthiol und Butanthiol.

Die meisten der vorgenannten Verunreinigungen können durch ein entsprechend ausgestaltetes Gaswäscheverfahren mit Methanol als physikalisch wirkendem Absorptionsmittel vollständig oder zumindest bis in den Spurenbereich entfernt werden. In Methanol als physikalisch wirkendem Absorptionsmittel wird die Löslichkeit der absorbierten Gase in Methanol durch physikalische Wechselwirkungen bewirkt. Insbesondere wird die Absorption nicht durch chemische Wechselwirkungen bewirkt, wie beispielsweise eine Säure-Base-Wechselwirkung.

Eine Ausführungsform des erfindungsgemäßen Verfahrens ist dadurch gekennzeichnet, dass das gemäß Schritt (b) erhaltene gasförmige Gemisch gekühlt wird, wobei das im Gemisch enthaltene Methanol teilweise kondensiert, und das kondensierte Methanol der Stripp-Stufe zur Erzeugung von Methanol-Dampf zur Verwendung als Stripp-Gas zugeführt wird.

Durch diese Maßnahme wird die Menge des für die Wasch-Stufe gemäß (e) benötigten Wassers minimiert. Weiterhin kann das kondensierte Methanol direkt in der Stripp-Stufe zur Erzeugung des Stripp-Gases (Methanol-Dampf) verwendet werden. Das Stripp-Gas wird beispielsweise durch einen in eine Stripp-Kolonne integrierten Aufkocher erzeugt. Der für die Kühlung des gemäß Schritt (b) erhaltenen Gemischs erforderliche Kühler kann in vorteilhafter Weise direkt in die Stripp-Kolonne integriert werden, insbesondere in den Kopf der Stripp-Kolonne integriert werden. Das durch die Kühlung kondensierte Methanol läuft dann nach unten in den Sumpf der Stripp-Kolonne, wo durch den Aufkocher der Methanol-Dampf erzeugt wird.

Eine Ausführungsform des erfindungsgemäßen Verfahrens ist dadurch gekennzeichnet, dass das gemäß Schritt (g) abgezogene, Methanol und Wasser aufweisende flüssige Gemisch einem thermischen Trennverfahren zur Trennung von Methanol und Wasser unterzogen wird.

Gaswäscheverfahren, welche Methanol als Absorptionsmittel verwenden, umfassen üblicherweise eine Vorrichtung zur thermischen Trennung von Wasser und Methanol, da sich über Synthesegas eingeschlepptes Wasser, welches nicht vollständig durch Kondensation in einem vorgelagerten Schritt entfernt werden konnte, über einen längeren Zeitraum im Methanol-Kreislauf anreichert. Eine solche Vorrichtung ist üblicherweise eine Rektifikationskolonne. Die Vorrichtung kann in vorteilhafter Weise auch für die Trennung des gemäß Schritt (g) aus der Wasch-Stufe abgezogenen Methanol-Wasser-Gemischs in Methanol und Wasser genutzt werden.

Eine Ausführungsform des erfindungsgemäßen Verfahrens ist dadurch gekennzeichnet, dass die gemäß Schritt (f) aus der Wasch-Stufe abgezogenen, zumindest teilweise von Methanol befreiten Thiole einem Verfahren zur Schwefelrückgewinnung zugeführt werden.

Die gemäß Schritt (f) aus der Wasch-Stufe abgezogenen Thiole sind in der Regel im Wesentlichen vollständig oder vollständig frei von Methanol. Es ist daher in vorteilhafter Weise möglich, die von Methanol befreiten Thiole unmittelbar einem Verfahren zur Schwefelrückgewinnung zuzuführen, beispielsweise einer Anlage welche nach dem Claus-Prozess Schwefel erzeugt.

Eine Ausführungsform des erfindungsgemäßen Verfahrens ist dadurch gekennzeichnet, dass das gemäß Schritt (c) aus der Stripp-Stufe abgezogene Methanol zur Entfernung der co-absorbierten Gaskomponenten einer Heißregenerations-Stufe zugeführt wird.

Das gemäß Schritt (c) aus der Stripp-Stufe abgezogene Methanol enthält in der Absorptions-Stufe gemäß Schritt (a) co-absorbierte Gaskomponenten wie Kohlendioxid (CO₂), Schwefelwasserstoff (H₂S), Carbonylsulfid (COS) und Cyanwasserstoff (HCN). Diese werden in einer Heißregenerations-Stufe entfernt. Die Heißregenerationsstufe arbeitet ebenfalls nach dem Prinzip, dass Methanol-Dampf als Stripp-Gas zur Entfernung der vorgenannten Komponenten verwendet wird. Sie weist darüber hinausgehend im Kopfbereich ein System aus mehreren Kühlern und Abscheidern auf, um Methanol-Dampf zu kondensieren, welcher den Kopfbereich der Heißregenerations-Kolonne zusammen mit den ausgestrippten Gaskomponenten verlässt.

Eine Ausführungsform des erfindungsgemäßen Verfahrens ist dadurch gekennzeichnet, dass die co-absorbierten Gaskomponenten ein oder mehrere Elemente ausgewählt aus der Gruppe Cyanwasserstoff (HCN), Schwefelwasserstoff (H₂S), Carbonylsulfid (COS) und Kohlendioxid (CO₂) umfassen.

Eine Ausführungsform des erfindungsgemäßen Verfahrens ist dadurch gekennzeichnet, dass das gemäß Schritt (g) aus der Wasch-Stufe abgezogene, Methanol und Wasser aufweisende Gemisch Cyanwasserstoff (HCN) aufweist, und/oder das aus Schritt (c) abgezogene, mit co-absorbierten Gaskomponenten beladene flüssige Methanol Cyanwasserstoff (HCN) aufweist, und wobei der Cyanwasserstoff durch Zudosierung eines basischen Agens zu einem Cyanid-Salz umgesetzt wird.

Cyanwasserstoff stellt aufgrund seiner toxischen Eigenschaften selbst in geringsten Konzentrationen ein Problem dar, vor allem wenn sich die Substanz im Methanol-Kreislauf des Gaswäscheverfahrens über einen längeren Zeitraum anreichert. Daher ist dafür Sorge zu tragen, dass Cyanwasserstoff vollständig und restlos aus dem Kreislauf entfernt und einer fachgerechten Entsorgung zugeführt wird. Aufgrund seines hohen Absorptionskoeffizienten in Bezug auf Methanol wird Cyanwasserstoff häufig zusammen mit den Thiolen in der für die Thiole konfigurierten Absorptionsstufe co-absorbiert. Cyanwasserstoff ist gut in Methanol und Wasser löslich. Daher findet sich der Cyanwasserstoff hauptsächlich in dem aus der Stripp-Stufe abgezogenen, mit co-absorbierten Gaskomponenten beladenen Methanol sowie in dem aus der Wasch-Stufe abgezogenen Methanol-Wasser-Gemisch. Damit Cyanwasserstoff einer fachgerechten Entsorgung zugeführt werden kann, wird dieser zunächst durch Zudosierung eines basischen Agens in ein Cyanid-Salz umgewandelt. Bei dem basischen Agens kann es sich beispielsweise um methanolische oder wässrige Natronlauge oder Kalilauge handeln. Entsprechend wird der Cyanwasserstoff in Natriumcyanid oder Kaliumcyanid umgewandelt. Diese gut wasserlöslichen Verbindungen reichern sich schließlich im Wasser der Vorrichtung an, welche für das thermische Trennverfahren zur Trennung von Methanol und Wasser genutzt wird.

Eine Ausführungsform des erfindungsgemäßen Verfahrens ist daher dadurch gekennzeichnet, dass der Cyanwasserstoff durch Zudosierung des basischen Agens in ein wasserlösliches Cyanid-Salz überführt wird. Das wasserlösliche Cyanidsalz kann anschließend im Rahmen einer Abwasserbehandlung zum Beispiel durch Oxidation mit einem geeigneten Oxidationsmittel in Kohlendioxid und Stickstoff überführt werden.

Eine Ausführungsform des erfindungsgemäßen Verfahrens ist dadurch gekennzeichnet, dass die Zudosierung des basischen Agens in der Heißregenerations-Stufe erfolgt, und/oder in einer für das thermische Trennverfahren konfigurierten Vorrichtung erfolgt, und/oder zwischen der Heißregenerations-Stufe und der für das thermische Trennverfahren konfigurierten Vorrichtung erfolgt.

Eine Ausführungsform des erfindungsgemäßen Verfahrens ist dadurch gekennzeichnet, dass das Gaswäscheverfahren eine Mehrzahl von Absorptionsstufen umfasst, wobei zumindest zwei weitere Absorptionsstufen vorgesehen sind, wobei die zwei weiteren Absorptionsstufen für die Entfernung von Schwefelwasserstoff (H₂S) und für die Entfernung von Kohlendioxid (CO₂) konfiguriert sind.

Das erfindungsgemäße Verfahren ist als Teilverfahrens eines übergeordneten Gaswäscheverfahrens zu verstehen, wobei letzteres zur Entfernung aller in Synthesegas vorkommender unerwünschter Komponenten konfiguriert ist. Insbesondere verfügt das Gaswäscheverfahren über mindestens zwei weitere Absorptionsstufen, wobei diese Absorptionsstufen zur Entfernung von Schwefelwasserstoff und Kohlendioxid konfiguriert sind.

Dabei ist es von Vorteil, wenn die für die Entfernung von Thiolen konfigurierte Absorptions-Stufe und die für die Entfernung von Schwefelwasserstoff (H₂S) konfigurierte Absorptionsstufe in eine gemeinsame Absorptionskolonne integriert sind.

Dadurch kann eine Teilmenge des Methanols, welche bereits für die Absorption von Schwefelwasserstoff genutzt wurde, auch für die Absorption der Thiole in der für die Absorption von Thiolen konfigurierten Absorptions-Stufe genutzt werden. Da die Gesamtkonzentration der Thiole vergleichsweise gering ist, ist es ausreichend eine kleine Teilmenge des bereits mit Schwefelwasserstoff beladenen Methanols für die Absorption der Thiole abzuzweigen. Der Großteil des für die Absorption von Schwefelwasserstoff genutzten und damit beladenen Methanols wird somit nicht für die Absorption der Thiole genutzt, sondern direkt einer geeigneten Regeneration zugeführt, welche üblicherweise mehrere flash-Stufen und die Heißregenerations-Stufe umfasst. Mit den Thiolen co-absorbierter Schwefelwasserstoff wird entweder mit dem beladenen Methanol als co-absorbierte Komponente aus der Stripp-Stufe abgezogen oder verlässt die Wasch-Stufe zusammen mit den mit Wasser gewaschenen Thiolen zur Schwefelrückgewinnung.

Eine Ausführungsform des erfindungsgemäßen Verfahrens ist dadurch gekennzeichnet, dass die für die Entfernung von Kohlendioxid (CO₂) konfigurierte Absorptionsstufe in eine separate Absorptionskolonne integriert ist.

Dabei ist insbesondere bevorzugt, dass das Synthesegas zuerst den Absorptionsstufen zugeführt wird, welche zur Entfernung von Schwefelwasserstoff (H₂S) und Thiolen und optional zur Entfernung weiterer schwefelhaltiger Komponenten konfiguriert sind, das von schwefelhaltigen Komponenten befreite Synthesegas anschließend einer Wassergas-Shift-Einheit zugeführt wird, und das durch die Wassergas-Shift-Einheit mit Wasserstoff und Kohlendioxid angereicherte Synthesegas anschließend der Absorptionsstufe zugeführt wird, welche zur Entfernung von Kohlendioxid (CO₂) konfiguriert ist.

Insbesondere für die Herstellung von Wasserstoff aus Synthesegas wird das Synthesegas einer Wassergas-Shift-Reaktion unterzogen, um im Synthesegas enthaltenes Kohlenmonoxid mit Wasser zu Wasserstoff und Kohlendioxid umzusetzen. Der für die Wassergas-Shift-Reaktion verwendete Katalysator kann durch Schwefelverbindungen vergiftet und schließlich deaktiviert werden. Es ist daher von Vorteil, aus dem noch nicht geshifteten Synthesegas zunächst alle Schwefelverbindungen durch Gaswäsche zu entfernen. Das schwefelfreie Synthesegas wird anschließend der Wassergas-Shift-Reaktion unterzogen. Es reichert sich dadurch mit Kohlendioxid an. Die gesamte Kohlendioxid-Menge, das heißt die aus dem ursprünglich erzeugten Synthesegas stammende Kohlendioxid-Menge und die durch die Wassergas-Shift-Reaktion erzeugte Kohlendioxid-Menge wird daher anschließend in vorteilhafterweise durch eine für die Entfernung von Kohlendioxid dedizierte Absorptionsstufe entfernt.

Eine Ausführungsform des erfindungsgemäßen Verfahrens ist dadurch gekennzeichnet, dass das gemäß Schritt (a) erhaltene beladene Methanol vor Schritt (b) einer flash-Stufe zur Entfernung von co-absorbierten Wertgasen, insbesondere von co-absorbiertem Wasserstoff und Kohlenmonoxid, zugeführt wird.

In Synthesegas enthaltene Wertgase (CO, H₂) weisen zwar in Bezug auf Methanol als Absorptionsmittel im Vergleich zu den unerwünschten Komponenten nur einen sehr niedrigen Absorptionskoeffizienten auf, trotzdem werden die Wertgase in geringen Mengen in Methanol co-absorbiert. Das in Schritt (a) erhaltene beladene Methanol wird daher in vorteilhafter Weise aus der Absorptions-Stufe abgezogen und einer flash-Stufe zugeführt, und anschließend erst der Stripp-Stufe gemäß Schritt (b) zugeführt. In der flash-Stufe erfolgt die Desorption der Wertgase durch einfache Drucksenkung, beispielsweise auf einen Druck von 10 bis 25 bar. Die Wertgase werden anschließend wieder auf Absorptionsdruck (zum Beispiel 20 bis 60 bar) komprimiert und dem in der Gaswäsche zu behandelnden Synthesegas zugeführt.

Eine Ausführungsform des erfindungsgemäßen Verfahrens ist dadurch gekennzeichnet, dass das Verfahren zur Entfernung von Thiolen und weiterhin zur Entfernung von Kohlenstoffdisulfid (CS₂) und Thiophen aus Synthesegas ausgelegt ist.

Kohlenstoffdisulfid und Thiophen weisen ähnlich wie Thiole einen hohen Absorptionskoeffizienten in Bezug auf Methanol als Absorptionsmittel auf und werden daher häufig in der für die Absorption von Thiolen konfigurierten Absorptionsstufe co-absorbiert. Aufgrund ihrer ähnlichen physikalischen Eigenschaften werden diese ebenfalls in der Stripp-Stufe gemäß Schritt (b) durch Methanol-Dampf ausgestrippt, reichern sich in dem gasförmigen Gemisch mit Thiolen und Methanol an und können anschließend in der Wasch-Stufe gemäß Schritt (e) durch Waschen mit Wasser von Methanol befreit werden, ohne dass sie sich in Wasser in signifikanten Mengen lösen. Das erfindungsgemäße Verfahren ist daher auch zur Entfernung von Kohlenstoffdisulfid und Thiophen aus Synthesegas konfiguriert und geeignet.

Eine Ausführungsform des erfindungsgemäßen Verfahrens ist dadurch gekennzeichnet, dass der Methanol-Dampf gemäß Schritt (b) durch Erhitzen des Methanol der Stripp-Stufe erzeugt wird.

In vorteilhafter Weise wird in der Stripp-Stufe gemäß Schritt (b) erforderlicher Methanol-Dampf zur Verwendung als Stripp-Gas unmittelbar aus dem Methanol der Stripp-Stufe erzeugt, das heißt aus dem der Stripp-Stufe zugeführten, mit Thiolen und weiteren co-absorbierten Gaskomponenten beladenen Methanol. Dies erfolgt beispielsweise durch einen in die Stripp-Kolonne der Stripp-Stufe integrierten Aufkocher.

Die Aufgaben der Erfindung werden ferner zumindest teilweise gelöst durch eine Anlage zur Entfernung von Thiolen aus Synthesegas in einem Gaswäscheverfahren mit Methanol als physikalisch wirkendem Absorptionsmittel, insbesondere gemäß dem erfindungsgemäßen Verfahren nach einer der obigen Ausführungsformen, gekennzeichnet durch folgende miteinander in Wirkverbindung stehende Komponenten:
(a) Eine Absorptionskolonne, wobei die Absorptionskolonne zumindest eine Absorptions-Stufe aufweist, die zur Entfernung von Thiolen aus dem Synthesegas konfiguriert ist, wobei in der Absorptionsstufe mit Thiolen und weiteren co-absorbierten Gaskomponenten beladenes Methanol erhältlich ist;
(b) Eine Stripp-Kolonne, wobei die Stripp-Kolonne zum Strippen des gemäß Komponente (a) erhältlichen, mit Thiolen und weiteren co-absorbierten Gaskomponenten beladenen Methanol mit Methanol-Dampf als Stripp-Gas konfiguriert ist, wobei durch die Stripp-Kolonne ein Thiole und Methanol aufweisendes gasförmiges Gemisch sowie mit co-absorbierten Gaskomponenten beladenes flüssiges Methanol erhältlich ist;
(c) Eine Ausschleusevorrichtung zum Abziehen des durch Komponente (b) erhältlichen, mit co-absorbierten Gaskomponenten beladenen flüssigen Methanol aus der Stripp-Kolonne;
(d) Eine Ausschleusevorrichtung zum Abziehen des durch Komponente (b) erhältlichen, Thiole und Methanol aufweisenden gasförmigen Gemisch aus der Stripp-Kolonne;
(e) Eine Wasch-Kolonne zum Entfernen von Methanol aus dem gemäß Komponente (b) erhältlichen, Thiole und Methanol aufweisenden gasförmiges Gemisch, wodurch ein Methanol und Wasser aufweisendes flüssiges Gemisch sowie zumindest teilweise von Methanol befreite gasförmige Thiole erhältlich sind;
(f) Eine Ausschleusevorrichtung zum Abziehen der durch Komponente (e) erhältlichen, zumindest teilweise von Methanol befreiten gasförmigen Thiole aus der Wasch-Kolonne;
(g) Eine Ausschleusevorrichtung zum Abziehen des durch Komponente (e) erhältlichen, Methanol und Wasser aufweisenden flüssigen Gemisch aus der Wasch-Kolonne.

Eine Ausführungsform der erfindungsgemäßen Anlage ist dadurch gekennzeichnet, dass die Anlage eine Kühlvorrichtung umfasst, wobei die Kühlvorrichtung zum Kühlen des gemäß Komponente (b) erhältlichen gasförmigen Gemisch konfiguriert ist, wobei im Gemisch enthaltenes Methanol teilweise kondensierbar ist, und kondensiertes Methanol der Stripp-Kolonne zur Erzeugung von Methanol-Dampf zur Verwendung als Stripp-Gas zuführbar ist.

Eine Ausführungsform der erfindungsgemäßen Anlage ist dadurch gekennzeichnet, dass die Anlage eine Vorrichtung für ein thermisches Trennverfahren umfasst, wobei genannte Vorrichtung für die Trennung des gemäß Komponente (e) erhältlichen, Methanol und Wasser aufweisenden Gemischs in Methanol und Wasser konfiguriert ist.

Eine Ausführungsform der erfindungsgemäßen Anlage ist dadurch gekennzeichnet, dass die Anlage eine Heißregenerations-Kolonne umfasst, wobei die Heißregenerations-Kolonne zur Entfernung co-absorbierter Gaskomponenten aus dem gemäß Komponenten (b) erhältlichen, mit co-absorbierten Gaskomponenten beladenen flüssigen Methanol konfiguriert ist.

Eine Ausführungsform der erfindungsgemäßen Anlage ist dadurch gekennzeichnet, dass das gemäß Komponente (c) abziehbare, mit co-absorbierten Gaskomponenten beladene flüssige Methanol Cyanwasserstoff (HCN) beinhaltet, und/oder das gemäß Komponente (g) abziehbare, Methanol und Wasser aufweisende flüssige Gemisch Cyanwasserstoff (HCN) beinhaltet, und die Anlage eine Dosiervorrichtung für die Zudosierung eines basischen Agens beinhaltet, wobei vorgenannter Cyanwasserstoff (HCN) mit dem basischen Agens zu einem Cyanid-Salz umsetzbar ist.

Eine Ausführungsform der erfindungsgemäßen Anlage ist dadurch gekennzeichnet, dass die Dosiervorrichtung zur Zudosierung des basischen Agens in die Heißregenerations-Kolonne konfiguriert ist, oder zur Zudosierung des basischen Agens in die Vorrichtung für die thermische Trennung konfiguriert ist, oder für die Zudosierung des basischen Agens in eine Leitung angeordnet zwischen der Heißregenerations-Kolonne und der thermischen Trennvorrichtung konfiguriert ist.

Die Aufgaben der Erfindung werden ferner zumindest teilweise gelöst durch die Verwendung der erfindungsgemäßen Anlage für die Entfernung von Thiolen, und optional Kohlenstoffdisulfid (CS₂), und optional Thiophen aus Synthesegas.

### Ausführungsbeispiel

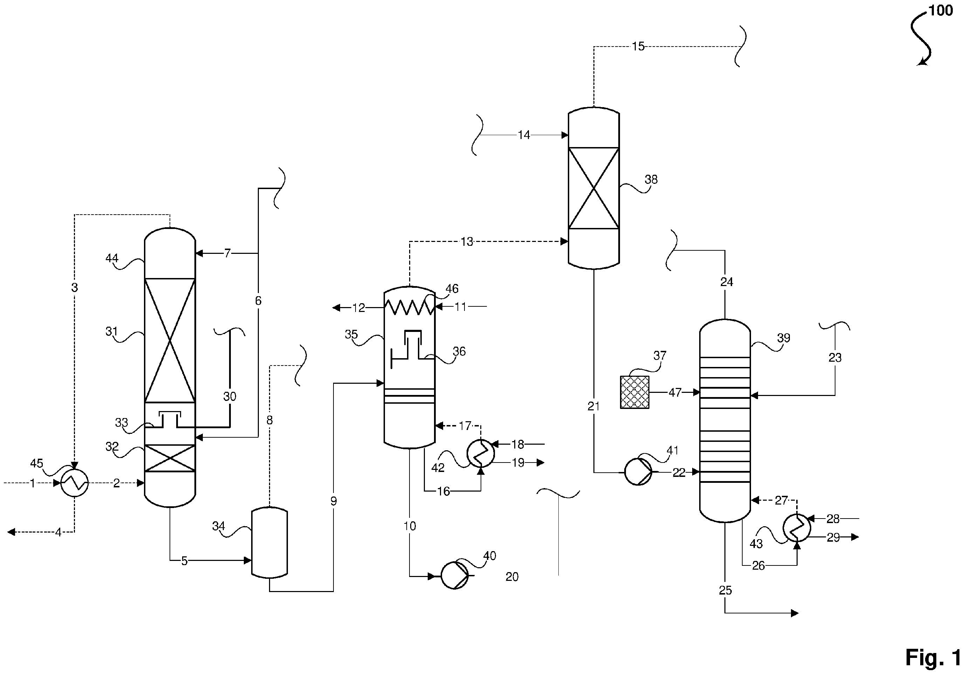

Figur 1 zeigt ein vereinfachtes Verfahrensfließbild einer möglichen Ausgestaltung eines erfindungsgemäßen Verfahrens 100 oder einer erfindungsgemäßen Anlage 100. Das durch das Verfahrensfließbild dargestellte Verfahren 100 ist als Teil eines übergeordneten Gaswäscheverfahrens zu sehen, welches grundsätzlich zur Entfernung aller im Synthesegas vorhandenen Gaskomponenten geeignet ist. Aus Gründen der Übersichtlichkeit sind nur die die Erfindung betreffenden Merkmale in Figur 1 dargestellt und/oder im Folgenden beschrieben. Gasströme sind in Figur 1 durch gestrichelte Linien dargestellt, während Flüssigkeitsströme durch durchgezogene Linien dargestellt sind. Die Strömungsrichtung der jeweiligen Ströme ist durch Pfeile angedeutet.

Unerwünschte Gaskomponenten enthaltendes Synthesegas aus einer Vergasungseinheit (Kohlevergasung, Müllvergasung, Biomassevergasung), wird über Leitung 1 herangeführt und zunächst in Wärmeübertrager 45 mit Hilfe eines Stroms von gereinigtem Synthesegas in Leitung 3 auf eine Temperatur von unter 0 °C abgekühlt. Sich dabei erwärmtes gereinigtes Synthesegas wird über Leitung 4 aus dem Verfahren ausgeschleust.

Das gekühlte Synthesegas wird über Leitung 2 weitergeführt und zur Entfernung von Schwefelwasserstoff und Thiolen in eine Absorptionskolonne 44 eingeschleust, welche über zwei Absorptionsstufen 31 und 32 verfügt. Beide Absorptionsstufen sind durch einen Kaminboden 33 voneinander separiert. Über Leitung 7 wird in den oberen Teil der Absorptionskolonne 44, in die Absorptionsstufe 31, für die Absorption von Schwefelwasserstoff geeignetes Methanol eingeschleust. Dabei kann es sich um unbeladenes oder beispielsweise bereits mit Kohlendioxid beladenes Methanol handeln. Im Beispiel der Figur 1 handelt es sich um bereits mit Kohlendioxid beladenes Methanol. Das tiefkalte, mit Kohlendioxid beladene Methanol strömt im Gegenstrom zum Synthesegas aus Leitung 2. Synthesegas durchströmt die Absorptionskolonne von unten nach oben, während das Methanol aus Leitung 7 die Absorptionskolonne von oben nach unten durchströmt und dabei Schwefelwasserstoff aus dem Synthesegas aus Leitung 2 aufnimmt. Das mit Kohlendioxid und Schwefelwasserstoff beladene Methanol wird von dem Kaminboden über Leitung 30 abgezogen und zu dessen Regeneration mehreren folgenden, nicht dargestellten Reinigungsstufen (flash-Stufen, Reabsorber, Heißregenerations-Stufe) zugeführt. Ein kleiner Teil des bereits mit Kohlendioxid beladenen Methanols wird über Leitung 6 in die untere Absorptionsstufe 32 der Absorptionskolonne 44 eingeschleust und absorbiert dort im Wesentlichen die im Synthesegas vorhandenen Thiole, sowie gegebenenfalls Thiophen und Kohlenstoffdisulfid und in geringerem Umfang andere Bestandteile wie Cyanwasserstoff, Schwefelwasserstoff und Carbonylsulfid, wobei letztere im Sinne der Erfindung als co-absorbierte Bestandteile zu verstehen sind. Da die Thiole in Bezug auf Methanol als Absorptionsmittel einen hohen Absorptionskoeffizienten aufweisen, reicht die über Leitung 6 zugeführte, kleine Methanol-Menge aus, um die im Synthesegas nur in geringfügigen Konzentrationen vorhandenen Thiole und gegebenenfalls Thiophen und Kohlenstoffdisulfid quantitativ zu absorbieren.

Das zumindest mit Thiolen und co-absorbierten Gaskomponenten beladene Methanol wird über Leitung 5 aus der Absorptionskolonne 44 ausgeschleust und über ein Entspannungsventil (nicht gezeigt) in eine Flash-Kolonne 34 eingeschleust, in welcher unbeabsichtigt in Methanol co-absorbierte Wertgase (CO, H₂) desorbiert und über Leitung 8 abgezogen werden. Diese werden anschließend auf Absorptionsdruck komprimiert und dem zu behandelnden Synthesegas in Leitung 1 zurückgeführt (nicht gezeigt).

Das zumindest mit Thiolen und co-absorbierten Gaskomponenten beladene Methanol, sowie von Wertgasen nunmehr befreite Methanol wird über Leitung 9 aus der Flash-Kolonne 34 abgezogen und über Leitung 9 in die Stripp-Kolonne 35 eingeschleust. Die Stripp-Kolonne 35 verfügt in ihrem Sumpfbereich über einen Aufkocher 42, welcher durch Zuführung und Abführung von Frischdampf über die Leitungen 18 und 19 betrieben wird. Durch den Aufkocher 42 wird aus der Stripp-Kolonne 35 über Leitung 16 abgezogenes beladenes Methanol zum Sieden erhitzt und über Leitung 17 in die Stripp-Kolonne 35 zurückgeführt. Die so erzeugten Methanol-Dämpfe wirken in der Stripp-Kolonne als Stripp-Gas und treiben die Thiole, sowie gegebenenfalls Thiophen und Kohlenstoffdisulfid im Wesentlichen quantitativ aus dem beladenen Methanol aus. Dabei fallen die vorgenannten Bestandteile in der Gasphase nicht in Reinform, sondern zusammen mit einer nicht unerheblichen Menge an Methanol-Dämpfen an. Die Methanol-Dämpfe strömen in der Stripp-Kolonne 35 durch den Kaminboden 36 nach oben und werden innerhalb der Stripp-Kolonne 35 durch den in ihrem oberen Bereich integrierten Kühler 46 teilweise kondensiert. Der Kühler 46 wird über Zuleitung 11 und Ableitung 12 mit Kühlwasser versorgt. Nach der teilweisen Kondensation strömt das Methanol nach unten und kann im Sumpfbereich der Stripp-Kolonne 35 wieder für die Erzeugung von Stripp-Gas genutzt werden.

Das von Thiolen und gegebenenfalls Thiophen und Kohlenstoffdisulfid befreite Methanol kann noch co-absorbierte Komponenten wie Kohlendioxid, Schwefelwasserstoff, Carbonylsulfid und Cyanwasserstoff enthalten. Zur Entfernung dieser Komponenten wird das Methanol über Leitung 10 aus dem Sumpfbereich der Stripp-Kolonne abgezogen und mit Hilfe von Pumpe 40 und über Leitung 20 einer Heißregenerations-Kolonne (nicht gezeigt) zugeführt.

Das im Kopf-Bereich der Stripp-Kolonne 35 anfallende Gasgemisch weist Thiole, gegebenenfalls Thiophen und Kohlenstoffdisulfid sowie nicht durch Kühler 46 kondensierte Methanol-Dämpfe auf. Dieses gasförmige Gemisch wird über Leitung 13 abgezogen und einer Wasch-Kolonne 38 zugeführt. Die Wasch-Kolonne 38 wird mit Wasser als Waschflüssigkeit betrieben, beispielsweise Kesselspeisewasser, welches über Leitung 14 herangeführt und in die Wasch-Kolonne 38 eigetragen wird. Das gasförmige Gemisch, welches Thiole, sowie gegebenenfalls Thiophen und Kohlenstoffdisulfid, und Methanol-Dampf aufweist, durchströmt die Wasch-Kolonne 38 von unten nach oben. Wasser durchströmt die Wasch-Kolonne 38 im Gegenstrom von oben nach unten, wobei es aus dem gasförmigen Gemisch selektiv Methanol aufnimmt, also löst, während die vorgenannten Schwefelverbindungen nicht im Wasser gelöst werden. Diese verlassen die Wasch-Kolonne 38 über Leitung 15 und können anschließend beispielsweise einer nach dem Claus-Prozess betriebenen Schwefelrückgewinnungsanlage zugeführt werden (nicht gezeigt).

Das im Sumpf-Bereich der Wasch-Kolonne 38 anfallende Methanol-Wasser-Gemische wird über die Leitungen 21 und 22 mit Hilfe der Pumpe 41 aus der Wasch-Kolonne 38 abgezogen und in die Rektifikationskolonne 39 überführt. Rektifikationskolonne 39 ist zur thermischen Trennung eines Methanol-Wasser-Gemischs in Methanol und Wasser ausgelegt. Rektifikationskolonne 39 ist mit einem Aufkocher 43 ausgerüstet, welcher aus dem Sumpfbereich der Rektifikationskolonne 39 über Leitung 26 abgezogenes Methanol-Wasser-Gemisch zum Sieden erhitzt und über Leitung 27 in die Rektifikationskolonne zurückführt. Rektifikationskolonne 38 wird auch über Leitung 23 aus der Heißregenerations-Kolonne abgezogenes Methanol, welches nur eine Restbeladung an Wasser enthält, zugeführt. Das über Leitung 22 zugeführte Methanol-Wasser-Gemisch kann in geringer Konzentration mit Cyanwasserstoff belastet sein. Rektifikationskolonne 38 ist daher weiterhin mit einer Einheit zur Laugen-Zudosierung 37 ausgerüstet, welche in Abhängigkeit einer gemessenen Cyanwasserstoff-Konzentration (nicht gezeigt) über Leitung 47 wässrige Natronlauge zuführt, um den Cyanwasserstoff in Natriumcyanid zu überführen. Mit Natriumcyanid belastetes Wasser wird über Leitung 25 aus dem Sumpfbereich der Rektifikationskolonne 39 abgezogen. Da Natriumcyanid nicht flüchtig und praktisch nicht in Methanol löslich ist, reichert es sich im Sumpfbereich der Rektifikationskolonne 38, also im Wasser, an und kann dadurch quantitativ aus dem Gaswäschekreislauf ausgeschleust werden. Im Abwasser der Leitung 25 kann das Natriumcyanid beispielsweise durch Behandlung mit einem geeigneten Oxidationsmittel in eine ungiftige Form überführt werden.

Das folgende simulierte Zahlenbeispiel zeigt, dass im Sinne der Erfindung durch die Wasser-Wäsche praktisch kein Thiol-Verluste und Verlust an Thiophen in dem gasförmigen Gemisch auftritt, welches die Stripp-Kolonne über Leitung 13 verlässt.

Die Simulation wurde mit Hilfe der Software "Aspen Plus" (V9) durchgeführt und gilt für eine Gaswäscheeinheit, welche bei 33 bar Absorptionsdruck betrieben wird, wobei 440.000 Nm³/h geshiftetes Synthesegas prozessiert werden. Das rohe Synthesegas weist eine Konzentration von 5 ppmv Methanthiol, 5 ppmv Butanthiol sowie 5 ppmv Thiophen auf.

| Verbindung | Methanthiol | Butanthiol | Thiophen |
|---|---|---|---|
| Leitung 13 | 100 % | 100 % | 100 % |
| Leitung 15 | 99 % | 98 % | 97 % |

Die im Methanol-Thiol-Thiophen Gemisch in Leitung 13 gefundene Menge an Methanthiol, Butanthiol und Thiophen wurde auf 100 % normiert. Es zeigt sich, dass durch die Wasser-Wäsche in Waschkolonne 38 nur marginale Verluste der gezeigten Verbindungen auftreten, so dass im von Methanol befreiten Gemisch in Leitung 15 die Thiole und Thiophen praktisch vollständig zurückgewonnen werden.

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination von Merkmalen in Bezug auf verschiedene Arten von Gegenständen oder Anspruchstypen in Betracht gezogen werden kann. Merkmale können kombiniert werden um synergetische Effekte zu erzielen, welche über die einfache Summierung der technischen Merkmale hinausgehen.

Während die Erfindung im Detail in der Zeichnung und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnung, der Offenbarung und der abhängigen Ansprüche verstanden und ausgeführt werden.

### Bezugszeichenliste

- 1 bis 30, 47: Leitung
- 31: Schwefelwasserstoff-Absorptionsstufe
- 32: Thiol-Absorptionsstufe
- 33: Kaminboden
- 34: Flash-Kolonne
- 35: Stripp-Kolonne
- 36: Kaminboden
- 37: Laugen-Zudosierung
- 38: Wasch-Kolonne
- 39: Rektifikationskolonne
- 40,41: Pumpe
- 42, 43: Aufkocher
- 44: Absorptionskolonne
- 45: Wärmeübertrager
- 46: Kühler
- 100: Erfindungsgemäßes Verfahren oder Anlage

## Patentansprüche

1. Verfahren zur Entfernung von Thiolen aus Synthesegas in einem Gaswäscheverfahren mit Methanol als physikalisch wirkendem Absorptionsmittel, **gekennzeichnet durch** die folgenden Verfahrensschritte:
(a) Entfernen von Thiolen aus Synthesegas in einer für die Entfernung von Thiolen konfigurierten Absorptions-Stufe, durch physikalische Absorption der Thiole in Methanol, wobei in der Absorptionsstufe mit Thiolen und weiteren co-absorbierten Gaskomponenten beladenes Methanol erhalten wird;
(b) Behandeln des gemäß Schritt (a) erhaltenen beladenen Methanol in einer Stripp-Stufe mit Methanol-Dampf als Stripp-Gas, wobei ein Thiole und Methanol aufweisendes gasförmiges Gemisch sowie mit co-absorbierten Gaskomponenten beladenes flüssiges Methanol erhalten werden;
(c) Abziehen des mit co-absorbierten Gaskomponenten beladenen flüssigen Methanol aus der Stripp-Stufe gemäß Schritt (b);
(d) Abziehen des Thiole und Methanol aufweisenden gasförmigen Gemisch aus der Stripp-Stufe gemäß Schritt (b);
(e) Entfernen von Methanol aus dem gemäß Schritt (d) abgezogenen gasförmigen Gemisch in einer Wasch-Stufe durch Waschen mit Wasser, wobei ein Methanol und Wasser aufweisendes flüssiges Gemisch sowie zumindest teilweise von Methanol befreite gasförmige Thiole erhalten werden;
(f) Abziehen der zumindest teilweise von Methanol befreiten gasförmigen Thiole aus der Wasch-Stufe gemäß Schritt (e);
(g) Abziehen des Methanol und Wasser aufweisenden flüssigen Gemisch aus der Wasch-Stufe gemäß Schritt (e).

2. Verfahren nach Anspruch 1, **dadurch gekennzeichnet, dass** das gemäß Schritt (b) erhaltene gasförmige Gemisch gekühlt wird, wobei das im Gemisch enthaltene Methanol teilweise kondensiert, und das kondensierte Methanol der Stripp-Stufe zur Erzeugung von Methanol-Dampf zur Verwendung als Stripp-Gas zugeführt wird.

3. Verfahren nach Anspruch 1 oder 2, **dadurch gekennzeichnet, dass** das gemäß Schritt (g) abgezogene, Methanol und Wasser aufweisende flüssige Gemisch einem thermischen Trennverfahren zur Trennung von Methanol und Wasser unterzogen wird.

4. Verfahren nach einem der vorherigen Ansprüche, **dadurch gekennzeichnet, dass** die gemäß Schritt (f) aus der Wasch-Stufe abgezogenen, zumindest teilweise von Methanol befreiten Thiole einem Verfahren zur Schwefelrückgewinnung zugeführt werden.

5. Verfahren nach einem der vorherigen Ansprüche, **dadurch gekennzeichnet, dass** das gemäß Schritt (c) aus der Stripp-Stufe abgezogene Methanol zur Entfernung der co-absorbierten Gaskomponenten einer Heißregenerations-Stufe zugeführt wird.

6. Verfahren nach einem der vorherigen Ansprüche, **dadurch gekennzeichnet, dass** die co-absorbierten Gaskomponenten ein oder mehrere Elemente ausgewählt aus der Gruppe Cyanwasserstoff (HCN), Schwefelwasserstoff (H₂S), Carbonylsulfid (COS) und Kohlendioxid (CO₂) umfassen.

7. Verfahren nach einem der vorherigen Ansprüche, **dadurch gekennzeichnet, dass** das gemäß Schritt (g) aus der Wasch-Stufe abgezogene, Methanol und Wasser aufweisende Gemisch Cyanwasserstoff (HCN) aufweist, und/oder das aus Schritt (c) abgezogene, mit co-absorbierten Gaskomponenten beladene flüssige Methanol Cyanwasserstoff (HCN) aufweist, und wobei der Cyanwasserstoff durch Zudosierung eines basischen Agens zu einem Cyanid-Salz umgesetzt wird.

8. Verfahren nach Anspruch 7, **dadurch gekennzeichnet, dass** die Zudosierung des basischen Agens in der Heißregenerations-Stufe erfolgt, und/oder in einer für das thermische Trennverfahren konfigurierten Vorrichtung erfolgt, und/oder zwischen der Heißregenerations-Stufe und der für das thermische Trennverfahren konfigurierten Vorrichtung erfolgt.

9. Verfahren nach einem der vorherigen Ansprüche, **dadurch gekennzeichnet, dass** das Gaswäscheverfahren eine Mehrzahl von Absorptionsstufen umfasst, wobei zumindest zwei weitere Absorptionsstufen vorgesehen sind, wobei die zwei weiteren Absorptionsstufen für die Entfernung von Schwefelwasserstoff (H₂S) und für die Entfernung von Kohlendioxid (CO₂) konfiguriert sind.

10. Verfahren nach Anspruch 9, **dadurch gekennzeichnet, dass** die für die Entfernung von Thiolen konfigurierte Absorptions-Stufe und die für die Entfernung von Schwefelwasserstoff (H₂S) konfigurierte Absorptionsstufe in eine gemeinsame Absorptionskolonne integriert sind.

11. Verfahren nach einem der Ansprüche 9 oder 10, **dadurch gekennzeichnet, dass** die für die Entfernung von Kohlendioxid (CO₂) konfigurierte Absorptionsstufe in eine separate Absorptionskolonne integriert ist.

12. Verfahren nach einem der Ansprüche 9 bis 11, **dadurch gekennzeichnet, dass** das Synthesegas zuerst den Absorptionsstufen zugeführt wird, welche zur Entfernung von Schwefelwasserstoff (H₂S) und Thiolen und optional zur Entfernung weiterer schwefelhaltiger Komponenten konfiguriert sind, das von schwefelhaltigen Komponenten befreite Synthesegas anschließend einer Wassergas-Shift-Einheit zugeführt wird, und das durch die Wassergas-Shift-Einheit mit Wasserstoff und Kohlendioxid angereicherte Synthesegas anschließend der Absorptionsstufe zugeführt wird, welche zur Entfernung von Kohlendioxid (CO₂) konfiguriert ist.

13. Verfahren nach einem der vorherigen Ansprüche, **dadurch gekennzeichnet, dass** das gemäß Schritt (a) erhaltene beladene Methanol vor Schritt (b) einer flash-Stufe zur Entfernung von co-absorbierten Wertgasen, insbesondere von co-absorbiertem Wasserstoff und Kohlenmonoxid, zugeführt wird.

14. Verfahren nach einem der vorherigen Ansprüche, **dadurch gekennzeichnet, dass** das Verfahren zur Entfernung von Thiolen und weiterhin zur Entfernung von Kohlenstoffdisulfid (CS₂) und Thiophen aus Synthesegas ausgelegt ist.

15. Verfahren nach einem der vorherigen Ansprüche, **dadurch gekennzeichnet, dass** der Methanol-Dampf gemäß Schritt (b) durch Erhitzen des Methanol der Stripp-Stufe erzeugt wird.

16. Eine Anlage zur Entfernung von Thiolen aus Synthesegas in einem Gaswäscheverfahren mit Methanol als physikalisch wirkendem Absorptionsmittel, insbesondere gemäß dem Verfahren nach einem der Ansprüche 1 bis 15, **gekennzeichnet durch** folgende miteinander in Wirkverbindung stehende Komponenten:
(a) Eine Absorptionskolonne, wobei die Absorptionskolonne zumindest eine Absorptions-Stufe aufweist, die zur Entfernung von Thiolen aus dem Synthesegas konfiguriert ist, wobei in der Absorptionsstufe mit Thiolen und weiteren co-absorbierten Gaskomponenten beladenes Methanol erhältlich ist;
(b) Eine Stripp-Kolonne, wobei die Stripp-Kolonne zum Strippen des gemäß Komponente (a) erhältlichen, mit Thiolen und weiteren co-absorbierten Gaskomponenten beladenen Methanol mit Methanol-Dampf als Stripp-Gas konfiguriert ist, wobei durch die Stripp-Kolonne ein Thiole und Methanol aufweisendes gasförmiges Gemisch sowie mit co-absorbierten Gaskomponenten beladenes flüssiges Methanol erhältlich ist;
(c) Eine Ausschleusevorrichtung zum Abziehen des durch Komponente (b) erhältlichen, mit co-absorbierten Gaskomponenten beladenen flüssigen Methanol aus der Stripp-Kolonne;
(d) Eine Ausschleusevorrichtung zum Abziehen des durch Komponente (b) erhältlichen, Thiole und Methanol aufweisenden gasförmigen Gemisch aus der Stripp-Kolonne;
(e) Eine Wasch-Kolonne zum Entfernen von Methanol aus dem gemäß Komponente (b) erhältlichen, Thiole und Methanol aufweisenden gasförmiges Gemisch, wodurch ein Methanol und Wasser aufweisendes flüssiges Gemisch sowie zumindest teilweise von Methanol befreite gasförmige Thiole erhältlich sind;
(f) Eine Ausschleusevorrichtung zum Abziehen der durch Komponente (e) erhältlichen, zumindest teilweise von Methanol befreiten gasförmigen Thiole aus der Wasch-Kolonne;
(g) Eine Ausschleusevorrichtung zum Abziehen des durch Komponente (e) erhältlichen, Methanol und Wasser aufweisenden flüssigen Gemisch aus der Wasch-Kolonne.

17. Anlage nach Anspruch 16, **dadurch gekennzeichnet, dass** die Anlage eine Kühlvorrichtung umfasst, wobei die Kühlvorrichtung zum Kühlen des gemäß Komponente (b) erhältlichen gasförmigen Gemisch konfiguriert ist, wobei im Gemisch enthaltenes Methanol teilweise kondensierbar ist, und kondensiertes Methanol der Stripp-Kolonne zur Erzeugung von Methanol-Dampf zur Verwendung als Stripp-Gas zuführbar ist.

18. Anlage nach Anspruch 16 oder 17, **dadurch gekennzeichnet, dass** die Anlage eine Vorrichtung für ein thermisches Trennverfahren umfasst, wobei genannte Vorrichtung für die Trennung des gemäß Komponente (e) erhältlichen, Methanol und Wasser aufweisenden Gemischs in Methanol und Wasser konfiguriert ist.

19. Anlage nach einem der Ansprüche 16 bis 18, **dadurch gekennzeichnet, dass** die Anlage eine Heißregenerations-Kolonne umfasst, wobei die Heißregenerations-Kolonne zur Entfernung co-absorbierter Gaskomponenten aus dem gemäß Komponenten (b) erhältlichen, mit co-absorbierten Gaskomponenten beladenen flüssigen Methanol konfiguriert ist.

20. Anlage nach einem der Ansprüche 16 bis 19, **dadurch gekennzeichnet, dass** das gemäß Komponente (c) abziehbare, mit co-absorbierten Gaskomponenten beladene flüssige Methanol Cyanwasserstoff (HCN) beinhaltet, und/oder das gemäß Komponente (g) abziehbare, Methanol und Wasser aufweisende flüssige Gemisch Cyanwasserstoff (HCN) beinhaltet, und die Anlage eine Dosiervorrichtung für die Zudosierung eines basischen Agens beinhaltet, wobei vorgenannter Cyanwasserstoff (HCN) mit dem basischen Agens zu einem Cyanid-Salz umsetzbar ist.

21. Anlage nach Anspruch 20, **dadurch gekennzeichnet, dass** die Dosiervorrichtung zur Zudosierung des basischen Agens in die Heißregenerations-Kolonne konfiguriert ist, oder zur Zudosierung des basischen Agens in die Vorrichtung für die thermische Trennung konfiguriert ist, oder für die Zudosierung des basischen Agens in eine Leitung angeordnet zwischen der Heißregenerations-Kolonne und der thermischen Trennvorrichtung konfiguriert ist.

22. Verwendung der Anlage nach einem der Ansprüche 16 bis 21 für die Entfernung von Thiolen, und optional Kohlenstoffdisulfid (CS₂), und optional Thiophen aus Synthesegas.
